# EUROPEAN PATENT APPLICATION

(11) **EP 4 827 003 A1**
(43) Date of publication of application: **21.10.2026**
(21) Application number: 25171353.3
(22) Date of filing: 17.04.2025
(51) Int. Cl.: H04B 5/20, H04B 5/79

(54) **AN INTEGRATED CIRCUIT**

(71) Applicant: NXP B.V., 5656 AG Eindhoven (NL)
(72) Inventor: Liebisch, Gregor, 5656 AG Eindhoven (NL); Haslinger, Dorian, 5656 AG Eindhoven (NL)
(74) Representative: Krott, Michel

(57) **Abstract**

An integrated circuit for a wireless charging device, the integrated circuit configured to: activate a near field communication, NFC, field for communicating with a receiver device; send a first NFC command message to the receiver device; receive a first NFC response message from the receiver device; temporarily deactivate the NFC field during receipt of the first NFC response message from the receiver device; send a second NFC command message to the receiver device subsequent to the temporary deactivation; and determine if the receiver device comprises a passive NFC tag or a powered NFC device based on a response of the receiver device to the second NFC command message.

## Description

### Field

The present disclosure relates to an integrated circuit for a wireless charging device and a method for characterising a near-field communication (NFC) receiver device.

### Summary

According to a first aspect of the present disclosure there is provided an integrated circuit for a wireless charging device, the integrated circuit configured to:
activate a near field communication, NFC, field for communicating with a receiver device;
send a first NFC command message to the receiver device;
receive a first NFC response message [corresponding to the first NFC command message] from the receiver device;
temporarily deactivate the NFC field during receipt of the first NFC response message from the receiver device;
send a second NFC command message to the receiver device subsequent to the temporary deactivation; and
determine if the receiver device comprises a passive NFC tag or a powered NFC device based on a response of the receiver device to the second NFC command message.

In one or more embodiments, the integrated circuit may be configured to determine the receiver device comprises a passive NFC tag by detecting a reset of the receiver device in response to the temporary deactivation of the NFC field.

In one or more embodiments, the integrated circuit may be configured to determine the receiver device to comprise a powered NFC device in response to receipt of a second NFC response message [corresponding to the second NFC command] from the receiver device. The integrated circuit may be configured to determine the receiver device to comprise a passive NFC tag if a second NFC response message [corresponding to the second NFC command] is not received within a timeout time.

In one or more embodiments, the first command message may comprise a command message to: transition the receiver device to an advanced operation state; or maintain the receiver device at the advanced operation state. The advanced operation state may comprise an operation state higher than an idle state. The second command message may comprise a command message for a receiver device at the advanced operation state.

In one or more embodiments, the second command message may be exclusively suitable for the advanced operation state.

In one or more embodiments, the advanced operation state may comprise a ready state, an active state or a protocol state.

In one or more embodiments, the second command message may not be suitable for a receiver device at an idle state.

In one or more embodiments, the first command message may comprise a REQA command message or a WUPA command message for transitioning the receiver device from an idle state to a ready state. The second command message may comprise a Select command message or an anticollision, AC, command message for the receiver device in the ready state.

In one or more embodiments, the first command message may comprise an AC command message for maintaining the receiver device in the ready state. The second command message may comprise a Select command message or an anticollision, AC, command message for the receiver device in the ready state.

In one or more embodiments, the first command message may comprise a Select command message for transitioning the receiver device from the ready state to an active state. The second command message may comprise a RATS command message for transitioning the receiver device from the active state to a protocol state.

In one or more embodiments, the first command message may comprise a RATS command message for transitioning the receiver device from the active state to the protocol state. The second command message may comprise a protocol command message for the receiver device in the protocol state.

In one or more embodiments, the first command message may comprise a protocol command message. The second command message may comprise a protocol command message.

In one or more embodiments, the integrated circuit may be configured to temporarily deactivate the NFC field by deactivating the NFC field for a deactivation duration and reactivating the NFC field after the deactivation duration.

In one or more embodiments, the deactivation duration may be from 40 microseconds to 500 microseconds.

In one or more embodiments, the integrated circuit may be configured to:
output an alert signal if the receiver device comprises a passive NFC tag; or
cause the wireless charging device to transmit a charging signal to the receiver device for charging a battery of the receiver device if the receiver device comprises a powered NFC device.

In one or more embodiments, the integrated circuit may be configured to:
temporarily deactivate the NFC field at a fixed time following transmission of the first NFC command message; or
temporarily deactivate the NFC field in response to receiving a first portion of the first NFC response message.

According to a second aspect of the present disclosure there is provided a NFC reader device comprising any integrated circuit disclosed herein.

According to a third aspect of the present disclosure there is provided a wireless charger device comprising any integrated circuit or the NFC reader disclosed herein.

According to a fourth aspect of the present disclosure there is provided a method of characterising a receiver device, the method comprising:
activating a near-field communication, NFC, field for communicating with the receiver device;
sending a first NFC command message to the receiver device;
receiving a first NFC response message from the receiver device;
temporarily deactivating the NFC field during receipt of the first NFC response message from the receiver device;
sending a second NFC command message to the receiver device subsequent to the temporary deactivation; and
determining if the receiver device comprises a passive NFC tag or a powered NFC device based on a response of the receiver device to the second NFC command message.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows an example embodiment of a wireless charging device communicating with a receiver device;
Figure 2 illustrates another example embodiment of a wireless charging device with a smart card positioned between the wireless charging device and the receiver device;
Figure 3 illustrates an example communication state diagram;
Figure 4 illustrates an example process of characterizing a NFC receiver device according to an embodiment of the present disclosure;
Figure 5 illustrates signals between a NFC reader and a receiver device with a powered NFC device operating in accordance with the process of Figure 4; and
Figure 6 illustrates signals between a NFC reader and a receiver device with a passive NFC tag operating in accordance with the process of Figure 4.

### Detailed Description

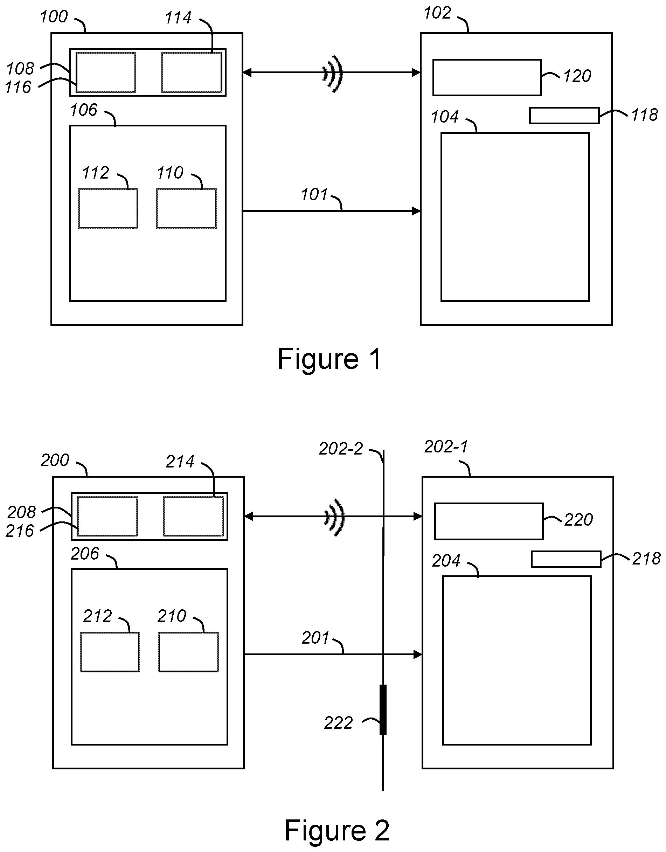

Referring to Figure 1, wireless charging devices such as Qi devices used in Automotive environments typically involves a wireless charging device 100 (also referred to as a wireless charging poller, a wireless charging transmitter, or a wireless charging dock) that transmits an RF charging signal 101 to a receiver device 102 (listener) for charging a battery 104 of the receiver device 102.

In this example, the wireless charging poller 100 includes a power transfer module 106 for power transfer, e.g. according to the QI standard at RF frequencies of 105 to 205 kHz. In some examples, the power transfer module 106 may communicate directly with the receiver device 102, e.g. establish a communication handshake prior to charging. In this example, the poller 100 also includes a separate near-field communication (NFC) module 108 for NFC communication with the receiver device 102. In automotive applications, a separate NFC communication module 108 (also referred to herein as a NFC reader 108) in the wireless charger can be used for smart card detection (see below) together with other functionality such as a CCC (car connectivity consortium) digital key. The power transfer module 106 includes a power transfer antenna 110 and a power transfer processing circuit 112. The power transfer antenna 110 can transmit an RF charging signal 101 to the battery 104 of the receiver 102. The NFC communication module 108 comprises an NFC communication antenna 114 and a communication processing circuit 116. In other examples, communication and power transfer functionality may be performed with the same antenna, for example in NFC wireless chargers. In some examples, two or more of the processing circuits and antenna(s) may form part of the same integrated circuit.

In this example, the receiver device 102 is a smart phone with an NFC communication antenna 118 positioned at a specific region of the receiver device 102. As the NFC antenna 118 is a powered antenna (powered by the battery 104), the NFC antenna 118 or receiver device 102 is an example of an active NFC device, a powered NFC device or a powered NFC endpoint. In other words, a powered NFC device is a NFC device that is powered by a battery, in contrast to a passive NFC tag that is powered by an RF field of an NFC reader 108. The receiver device 102 also includes a processing device 120 and the battery 104. Two-way communication via NFC can be provided between the two NFC communication antennas 114, 118. The misalignment of the two NFC communication antennas 114, 118 represents a weak-coupling scenario.

Wireless charging devices typically perform foreign object detection to determine the presence of a foreign object between the poller 100 and the listener 102. However, the foreign object detection is typically limited to the detection of metallic objects such as coins.

Wireless charging devices 100 can also utilize their NFC communication module 106 to perform smart card detection to determine if a card with a passive NFC tag is present between the wireless charging poller and the receiver device. Example smart cards include ticketing cards, security access cards, bank cards etc. Identifying the presence of the smart card between the poller and listener can alert a user and avoid damage to the passive NFC tag of the smart card. The risk of such an unwanted damage event in Qi charging systems has increased in recent years due to the Qi standard moving from 5W to 15W+ charging power. Existing solutions can use the NFC data received from a receiver device and use post-processing to identify the presence of a PLM (passive load modulation) or an ALM (active load modulation) NFC receiver device to identify if a card or phone is present. The reliance on post-processing the received NFC data limits the current smart card detection methods to strong-coupling scenarios where the NFC communication antenna 110 of the NFC reader 108 and the passive NFC tag are well aligned.

Weak NFC coupling scenarios are becoming more common for in-car wireless phone charging. This is due to the relatively large area where the phone can be placed on the charging dock and charged in contrast to the small area available on top of a wireless charging module for the NFC Antenna. This in combination with the trend of having a small NFC antenna on top of big phones, instead of a bigger antenna in the middle of the phones, is leading to weak-coupling scenarios that create a challenging environment for existing smart card protection methods.

A further complication is that phones can operate in a smart card emulation mode in which they mimic the response of the passive NFC tag of a smart card to provide the same functionality and digital properties from the phone instead of the smart card. This is especially common for ticketing applications, where the smart card emulation on a phone must be identical to a real physical card to avoid IoP (interoperability) issues in the field. Therefore, relying on the functionality of the smart card as in conventional smart card detection can lead to false positives when a smart phone is operating in a smart card emulation mode.

The present disclosure provides apparatus and methods enabling passive NFC tag / smart card detection in both strong- and weak-coupling scenarios.

Figure 2 illustrates a wireless charging device 200 according to an embodiment of the present disclosure. Features of Figure 2 that are also present in Figure 1 have been given corresponding numbers in the 200 series and are not necessarily described again here.

In this example, a second receiver device 202-2 in the form of a smart card with a NFC tag 222 has been placed between the wireless charging device 200 and the phone 202-1 (a first receiver device). If the wireless charging device 200 performs only an initial hand-shake with the phone 202-1 (e.g. via the NFC antennas 214, 218) and proceeds to charge the phone battery 204, the RF charging signal 201 may damage the NFC tag 222 of the smart card 202-2.

In one or more examples, the wireless charging device can communicate with the second receiver 202-2 (and optionally both receivers 202-1, 202-2) to identify the presence of the smart card 202-1. The NFC reader 208 may communicate with each receiver device 202-1, 202-2 in parallel or sequentially and the receiver device in communication may be referred to as the device under test (DUT).

The wireless charging device 200 includes an integrated circuit. The integrated circuit is not illustrated but may comprise one or more of: the NFC communication module / reader 208, the communication processing circuit 216, the NFC communication antenna 214, the power transfer module 206, the power transfer processing circuit 212, or the power transfer antenna 210. As noted for Figure 1, the wireless charging device may comprise a separate power transfer module 206 and NFC communication module 208 (e.g. for Qi charging and NFC communication) or may comprise a single communication and charging module performed using the same antenna (e.g. for NFC charging systems). The terms NFC reader 208 and integrated circuit may be used interchangeably in the present disclosure, however it will be appreciated that in some examples, the integrated circuit may not comprise the NFC transmitter 214.

The integrated circuit may perform the following operation for one or both of the receiver devices 202-1, 202-2.

The integrated circuit activates an NFC field of the NFC communication antenna 214. The NFC field may comprise an RF field. The integrated circuit transmits or broadcasts (to communicate with both devices) a first NFC command message to the receiver device 202-1, 202-2, and receives a corresponding first NFC response message from the receiver device 202-1, 202-2. The integrated circuit temporarily deactivates (disables / switches off) the NFC field / NFC antenna 214 during receipt of the first NFC response message. The integrated circuit determines if the receiver device 202-1, 202-2 comprises a passive NFC tag 222 or a powered NFC device / antenna 218 based on a response of the receiver device 202-1, 202-2 to the temporary deactivation of the NFC field.

The integrated circuit temporarily deactivates the NFC field, which may also be referred to herein as the integrated circuit makes, induces or causes a NFC / RF OFF pulse or a NFC / RF pause.

The NFC reader 208 may communicate with a passive NFC tag 222 using LMA_{PICC2PCD} (Low Modulation Amplitude Passive Inductive Coupling Communication to Passive Communication Device) for communication between NFC readers and passive NFC devices. The NFC reader 208 may also communicate with a powered NFC device 218, 220 using the same LMA_{PICC2PCD} method, particularly if the powered NFC device 218, 220 is emulating a passive tag.

By switching off the NFC field of the NFC antenna 214 for a short period during receipt of the first NFC response message from the receiver device 202-1, 202-2, the integrated circuit can determine if the receiver device 202-1, 202-2 comprises a NFC tag 222 or a powered NFC device 218, 220. During the temporary deactivation, the active powered NFC device 218, 220 can continue to use active load modulation (ALM) to actively transmit the first NFC response message. The active powered NFC device 218, 220 is not checking if the NFC field of from the NFC antenna 214 is present and does not detect the temporary interruption. The active powered NFC device 220 can continue to complete the transmission of the first NFC response message. On the other hand, a passive NFC tag 222 is powered by the transmitted NFC field of the NFC reader 208 and uses passive load modulation (PLM) to communicate the NFC response message back to the NFC reader 208. As a result, the passive NFC tag 222 may reset and stop sending the NFC response message in response to the temporary interruption in the NFC field.

In some examples, the integrated circuit may determine whether the receiver device 202-1, 202-2 comprises a passive NFC tag 222 or a powered NFC device 218, 220 by sending a further command message to the receiver device 202-1, 202-2. When a passive NFC tag 222 resets, it will lose its current protocol status. As a result, a passive NFC tag 222 will not respond correctly to a second command message that relates to the protocol status of the receiver device 202-2 prior to the reset.

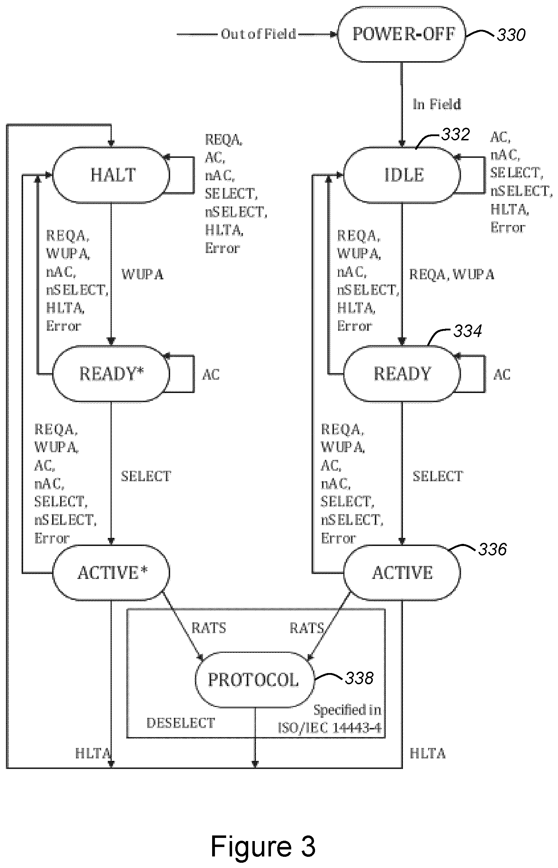

An example communication state diagram is illustrated in Figure 3. The state diagram is a Passive Inductive Coupling Communication (PICC) protocol for passive NFC tags. The example state diagram is of a Type 4 Protocol based on ISO14443-3. Similar state diagrams for other protocol types such as Type B or Type F, and corresponding circuits and methods, are within the scope of the present disclosure. The state diagram includes a plurality of operational states (which may also be referred to as protocol states): a power-off state 330, an idle state 332, a ready state 334, an active state 336 and a protocol state 338.

The passive NFC tag 222 will be in the power-off state 330 when it is not in positioned within an NFC field of a NFC reader 208. When the passive tag 222 is brought into an NFC field of a NFC reader, it transitions to the idle state 332. The passive NFC tag 222 may transition between further states in response to command messages received from the NFC reader 208. For example, the passive NFC tag 222 may transition from the idle state 332 to the ready state 334 in response to a REQA (request command type A) command message or a WUPA (wake up command type A) command message. As a further example, the passive NFC tag may transition from the active state 336 to the protocol state 338 in response to a RATS (request for answer to select) command message.

The receiver device 202-1, 202-2 responds to NFC commands from the NFC reader 208 with set NFC response messages within a time period specified according to ISO standards. For example, a NFC reader responds to a REQA command message with a Answer to request A (ATQA) response message.

If the NFC field of the NFC reader 208 deactivated (for a sufficient time period) or the passive NFC tag 222 is removed from the NFC field, the passive NFC tag 222 will transition / reset to the power-off state 330. If the NFC field is reactivated (i.e. a temporary deactivation) the passive NFC tag will return to the idle state 332.

In some examples, the integrated circuit may detect the loss in protocol status of a passive device as a way to differentiate a powered NFC receiver device 202-1 from a passive NFC receiver device 202-2. The lost protocol status can be detected by sending a second command message. If the receiver device responds it means a powered NFC device did not lose the protocol while if there is a timeout it means a passive NFC tag went back to the idle state 332.

For example, the integrated circuit may send a second NFC command message to the receiver device 202-1, 202-2 after the temporary deactivation (and reactivation) of the NFC field. The second NFC command may be suitable for a receiver device 202-1, 202-2 at an expected protocol state of the receiver device 202-1, 202-2 following the first NFC command message.

For example, the first NFC command message may comprise a command for transitioning the receiver device 202-1, 202-2 to, or maintaining the receiver device 202-1, 202-2, at, an advanced protocol state higher than the idle state 332 (i.e. the ready state 334, the active state 336 or the protocol state 338). The second NFC command may comprise a command for the receiver device 202-1, 202-2 at the advanced protocol state (i.e. the ready state 334, the active state 336 or the protocol state 338), in other words the expected protocol state of the receiver device 202-1, 202-2 in response to the first command message. The second NFC command message may comprise a command that is exclusive to the advanced / expected protocol state of the receiver device (i.e. a receiver device at a protocol state different to the advanced / expected state will not respond to the second command message). In some examples, the second NFC command message may comprise a command message that a receiver device at the idle state will not respond to.

For example, the integrated circuit may send a first command message comprising a Select command message that transitions the receiver device 202-1, 202-2 from the ready state 334 to the active state 336. The receiver device 202-1, 202-2 will respond with a first NFC response message comprising an Answer to Select (ATS) response message. The integrated circuit temporarily deactivates the NFC field during receipt of the first NFC response message from the receiver device 202-1. For the receiver device 202-2 with a passive NFC tag 222, the device resets to the idle state 332 in response to the NFC deactivation. For the receiver device 202-1 comprising the powered NFC device 218, 220, the device does not reset in response to the deactivation and remains in the active state 336. The integrated circuit may send a second command message comprising a RATS command. The receiver device 202-2 with the passive NFC tag 222 in the idle state 332 will not respond to the second command message and the integrated circuit can detect a timeout condition. The integrated circuit may identify the receiver device as comprising a passive NFC tag 222 (a PLM device) in response to the timeout condition (e.g. no response within a timeout time). The receiver device 202-1 with the powered NFC device 218, 220 will respond as expected with a second NFC response message. The integrated circuit may identify the receiver device 202-1 as comprising a powered NFC device 218, 220 (a ALM device) in response to receiving the second NFC response message.

As a further example, the integrated circuit may send a first command message comprising an anticollision (AC) message for the receiver device 202-1, 202-2 in the ready state 334. The AC message is a check message to detect for multiple NFC receiver devices in range. The receiver device 202-1, 202-2 should remain in the ready state 334 in response to the AC command message. The second command message may comprise the Select command message for the receiver device in the ready state 334. The receiver device 202-1 with the powered NFC device 218, 220 will respond with an ATS response message. The receiver device with the passive NFC tag 222 will have reset to the idle state 332 in response to the temporary deactivation of the NFC field and no response will be sent within the timeout time. The integrated circuit can differentiate the type of receiver device based on the response to the temporary deactivation of the NFC field.

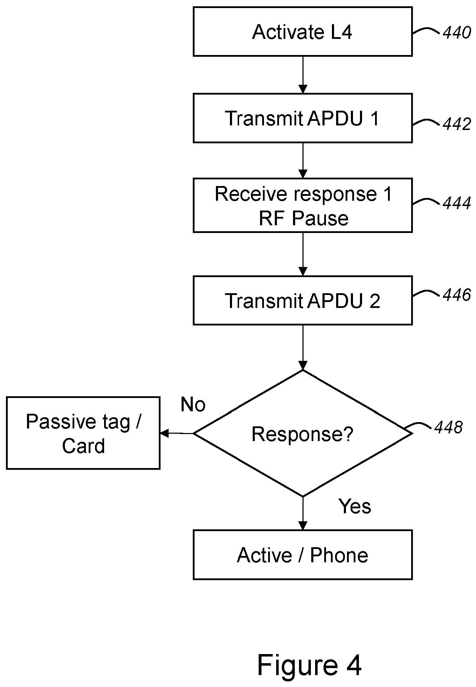

Figure 4 illustrates a further example process of characterizing a NFC receiver device 202-1, 202-2 according to an embodiment of the present disclosure. The process is described with continuing reference to Figures 2 and 3.

At a first step 440, layer 4 communication is established between the NFC reader 208 and the NFC receiver device 202-1, 202-2. In other words, the receiver device 202-1, 202-2, is in the protocol state 338.

At a second step 442, the NFC reader device 208 transmits a first NFC command message in the form of a first APDU (application protocol data unit) command message to the receiver device 202-1, 202-2.

At a third step 444, the NFC reader device 208 receives a first response message from the receiver device 202-1, 202-2. During receipt of the first response message, the NFC reader device 208 temporarily deactivates the NFC field of the NFC antenna 214 of the NFC reader 208.

At a fourth step 446, the NFC reader device 208 transmits a second NFC command message in the form of a second APDU command message to the receiver device 202-1, 202-2.

At a fifth decision step 448, the NFC reader device 208 determines the receiver device 202-1, 202-2 as comprising a passive NFC tag 222 or a powered NFC device 218, 220 based on whether a second NFC response message is received corresponding to the second NFC command message. If a second NFC response message is received, the NFC reader 208 determines the receiver device 202-1 to comprise a powered NFC device 218, 220 e.g. the receiver device 202-1 is a phone. If no second response message is received within a timeout time, the receiver device 202-2 is identified as comprising a passive NFC tag 222, e.g. a bank card or an access card.

In some examples, the integrated circuit may temporarily deactivate the NFC field at a fixed time following transmission of (a last bit of) the first NFC command message. The fixed time may correspond to an expected time of the first NFC response message which may be set according to ISO standards. In some examples, the integrated circuit may temporarily deactivate the NFC field in response to receiving a first portion of the first NFC response message.

In some examples, the integrated circuit deactivates the NFC field of the NFC transmitter 214 for a fixed time period - a deactivation duration. Passive NFC tags 222 may include a buffer capacitor to allow for temporary interruptions in the NFC field, for example if a Type A Miller pause (max ~40µs) is encoded in a clock stop stage. Therefore, the integrated circuit may deactivate the NFC field for a deactivation duration greater than 40µs. In some examples, the deactivation duration may be from 100 µs to 500 µs.

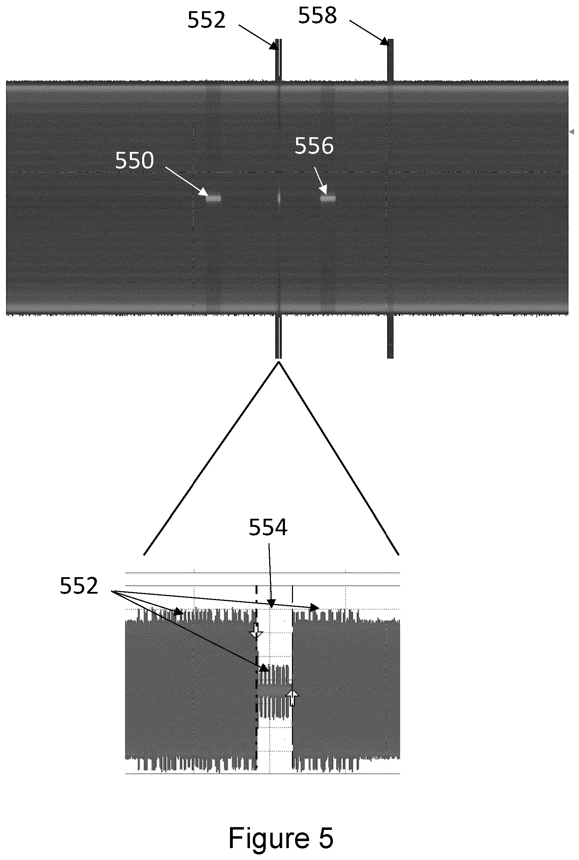

Figure 5 illustrates signals between a NFC reader 208 and a receiver device 202-1 with a powered NFC device 218, 220 operating in accordance with the process of Figure 4.

The NFC reader 208 transmits a first APDU command message 550 at a first time. The NFC reader 208 receives a first NFC response message 552 from the receiver device 202-1 in response to the first APDU command message 550 at a second time later than the first time. During receipt of the first NFC response message 552, the NFC reader 208 temporarily deactivates the NFC field (indicated by dip in RF signal 554). In this example, the deactivation duration is 85 µs. The NFC reader 208 receives the first NFC response message 552 before, during and after the temporary deactivation 554 because the receiver device 202-1 comprises a powered NFC device 220 that does not reset in response to the NFC field deactivation 554. Following the temporary deactivation 554 of the NFC field, the NFC reader 208 sends a second APDU command message 556 to the receiver device 202-1. The NFC reader 208 receives a second NFC response message 558 in response to the second APDU command message. The NFC reader 208 can identify the receiver device 202-1 as comprising a powered NFC device in response to receiving the second NFC response message 558.

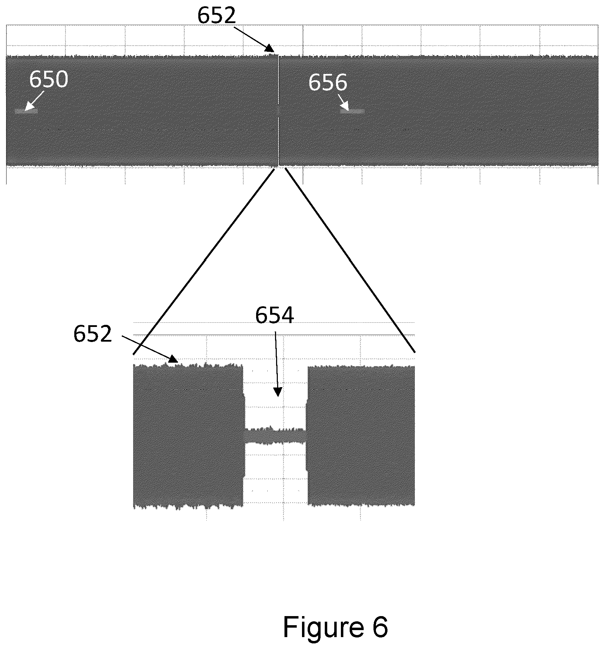

Figure 6 illustrates signals between a NFC reader 208 and a receiver device 202-2 with a passive NFC tag 222 operating in accordance with the process of Figure 4.

The NFC reader 208 transmits a first APDU command message 650 at a first time. The NFC reader 208 receives a first NFC response message 652 from the receiver device 202-1 in response to the first APDU command message 550 at a second time later than the first time. The first NFC response message 652 is harder to see in this example because the signal is weaker for a passive NFC tag 222, however a small ripple can be seen prior to the NFC field deactivation 654.

During receipt of the first NFC response message 652, the NFC reader 208 temporarily deactivates the NFC field (indicated by dip in RF signal 654). The NFC reader 208 only receives the first NFC response message 652 before, the temporary deactivation 554 and receipt of the first NFC message 652 terminates concurrent with the temporary deactivation of the NFC field 654. The passive NFC tag 222 has reset to the idle state in response to the deactivation. Following the temporary deactivation 654 of the NFC field, the NFC reader 208 sends a second APDU command message 656 to the receiver device 202-2. The NFC reader 208 does not receive a second NFC response message in response to the second APDU command message. The NFC reader 208 can identify the receiver device 202-2 as comprising a passive NFC tag 222 in response to not receiving a second NFC response message within the timeout time i.e. by identifying a timeout prior to receiving the expected response from the receiver device 202-2.

The present disclosure describes circuits, devices and methods for implementing smart card protection based on the physical behavior of a DUT by making a short RF OFF pulse (temporary deactivation of NFC field) while the DUT is answering to a reader command message. The RF OFF pulse can be implemented at any stage of the message protocol. For example, on a low level e.g. during Select phase or earlier at Answer to request A (ATQA) in response to a REQA command, or at the protocol messaging level. A DUT with a passive NFC device performs a Power on reset and jumps back to the start of the state diagram. An ALM device does not reset and continues in the state diagram which can then be evaluated by sending the next command. The difference in response enables passive tag / smart card detection.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. An integrated circuit for a wireless charging device, the integrated circuit configured to:
activate a near field communication, NFC, field for communicating with a receiver device;
send a first NFC command message to the receiver device;
receive a first NFC response message from the receiver device;
temporarily deactivate the NFC field during receipt of the first NFC response message from the receiver device;
send a second NFC command message to the receiver device subsequent to the temporary deactivation; and
determine if the receiver device comprises a passive NFC tag or a powered NFC device based on a response of the receiver device to the second NFC command message.

2. The integrated circuit of claim 1, wherein the integrated circuit is configured to determine the receiver device comprises a passive NFC tag by detecting a reset of the receiver device in response to the temporary deactivation of the NFC field.

3. The integrated circuit of claim 1 or claim 2, wherein the integrated circuit is configured to:
determine the receiver device to comprise a powered NFC device in response to receipt of a second NFC response message from the receiver device; and
determine the receiver device to comprise a passive NFC tag if a second NFC response message is not received within a timeout time.

4. The integrated circuit of any preceding claim, wherein:
the first command message comprises a command message to:
transition the receiver device to an advanced operation state; or
maintain the receiver device at the advanced operation state, wherein the advanced operation state comprises an operation state higher than an idle state; and
the second command message comprises a command message for a receiver device at the advanced operation state.

5. The integrated circuit of claim 4, wherein the second command message is exclusively suitable for the advanced operation state.

6. The integrated circuit of claim 4 or claim 5, wherein the advanced operation state comprises a ready state, an active state or a protocol state.

7. The integrated circuit of any preceding claim, wherein the second command message is not suitable for a receiver device at an idle state.

8. The integrated circuit of any preceding claim, wherein:
the first command message comprises a REQA command message or a WUPA command message for transitioning the receiver device from an idle state to a ready state and the second command message comprises a Select command message or an anticollision, AC, command message for the receiver device in the ready state;
the first command message comprises an AC command message for maintaining the receiver device in the ready state and the second command message comprises a Select command message or an anticollision, AC, command message for the receiver device in the ready state;
the first command message comprises a Select command message for transitioning the receiver device from the ready state to an active state and the second command message comprises a RATS command message for transitioning the receiver device from the active state to a protocol state;
the first command message comprises a RATS command message for transitioning the receiver device from the active state to the protocol state and the second command message comprises a protocol command message for the receiver device in the protocol state; or
the first command message comprises a protocol command message and the second command message comprises a protocol command message.

9. The integrated circuit of any preceding claim, wherein the integrated circuit is configured to temporarily deactivate the NFC field by deactivating the NFC field for a deactivation duration and reactivating the NFC field after the deactivation duration.

10. The integrated circuit of claim 8 or claim 9, wherein the deactivation duration is from 40 microseconds to 500 microseconds.

11. The integrated circuit of any preceding claim, wherein the integrated circuit is configured to:
output an alert signal if the receiver device comprises a passive NFC tag; or
cause the wireless charging device to transmit a charging signal to the receiver device for charging a battery of the receiver device if the receiver device comprises a powered NFC device.

12. The integrated circuit of any preceding claim, wherein the integrated circuit is configured to:
temporarily deactivate the NFC field at a fixed time following transmission of the first NFC command message; or
temporarily deactivate the NFC field in response to receiving a first portion of the first NFC response message.

13. A NFC reader device comprising the integrated circuit of any preceding claim.

14. A wireless charger device comprising the integrated circuit of any of claims 1 to 12 or the NFC reader of claim 13.

15. A method of characterising a receiver device, the method comprising:
activating a near-field communication, NFC, field for communicating with the receiver device;
sending a first NFC command message to the receiver device;
receiving a first NFC response message from the receiver device;
temporarily deactivating the NFC field during receipt of the first NFC response message from the receiver device;
sending a second NFC command message to the receiver device subsequent to the temporary deactivation; and
determining if the receiver device comprises a passive NFC tag or a powered NFC device based on a response of the receiver device to the second NFC command message.

## Amended claims

### Amended claims in accordance with Rule 137(2) EPC.

1. An integrated circuit for a wireless charging device (200), the integrated circuit configured to:
activate a near field communication, NFC, field for communicating with a receiver device (202-1, 202-2);
send a first NFC command message to the receiver device (202-1, 202-2);
receive a first NFC response message from the receiver device (202-1, 202-2);
temporarily deactivate the NFC field during receipt of the first NFC response message from the receiver device (202-1, 202-2);
send a second NFC command message to the receiver device (202-1, 202-2) subsequent to the temporary deactivation; and
determine if the receiver device (202-1, 202-2) comprises a passive NFC tag or a powered NFC device based on a response of the receiver device to the second NFC command message.

2. The integrated circuit of claim 1, wherein the integrated circuit is configured to determine the receiver device (202-1, 202-2) comprises a passive NFC tag by detecting a reset of the receiver device in response to the temporary deactivation of the NFC field.

3. The integrated circuit of claim 1 or claim 2, wherein the integrated circuit is configured to:
determine the receiver device (202-1, 202-2) to comprise a powered NFC device in response to receipt of a second NFC response message from the receiver device; and
determine the receiver device (202-1, 202-2) to comprise a passive NFC tag if a second NFC response message is not received within a timeout time.

4. The integrated circuit of any preceding claim, wherein:
the first command message comprises a command message to:
transition the receiver device (202-1, 202-2) to an advanced operation state; or
maintain the receiver device (202-1, 202-2) at the advanced operation state, wherein the advanced operation state comprises an operation state higher than an idle state; and
the second command message comprises a command message for a receiver device (202-1, 202-2) at the advanced operation state.

5. The integrated circuit of claim 4, wherein the second command message is exclusively suitable for the advanced operation state.

6. The integrated circuit of claim 4 or claim 5, wherein the advanced operation state comprises a ready state, an active state or a protocol state.

7. The integrated circuit of any preceding claim, wherein the second command message is not suitable for a receiver device (202-1, 202-2) at an idle state.

8. The integrated circuit of any preceding claim, wherein:
the first command message comprises a REQA command message or a WUPA command message for transitioning the receiver device (202-1, 202-2) from an idle state to a ready state and the second command message comprises a Select command message or an anticollision, AC, command message for the receiver device in the ready state;
the first command message comprises an AC command message for maintaining the receiver device (202-1, 202-2) in the ready state and the second command message comprises a Select command message or an anticollision, AC, command message for the receiver device in the ready state;
the first command message comprises a Select command message for transitioning the receiver device (202-1, 202-2) from the ready state to an active state and the second command message comprises a RATS command message for transitioning the receiver device from the active state to a protocol state;
the first command message comprises a RATS command message for transitioning the receiver device (202-1, 202-2) from the active state to the protocol state and the second command message comprises a protocol command message for the receiver device in the protocol state; or
the first command message comprises a protocol command message and the second command message comprises a protocol command message.

9. The integrated circuit of any preceding claim, wherein the integrated circuit is configured to temporarily deactivate the NFC field by deactivating the NFC field for a deactivation duration and reactivating the NFC field after the deactivation duration.

10. The integrated circuit of claim 8 or claim 9, wherein the deactivation duration is from 40 microseconds to 500 microseconds.

11. The integrated circuit of any preceding claim, wherein the integrated circuit is configured to:
output an alert signal if the receiver device (202-1, 202-2) comprises a passive NFC tag; or
cause the wireless charging device (200) to transmit a charging signal (201) to the receiver device (202-1, 202-2) for charging a battery (204) of the receiver device if the receiver device comprises a powered NFC device.

12. The integrated circuit of any preceding claim, wherein the integrated circuit is configured to:
temporarily deactivate the NFC field at a fixed time following transmission of the first NFC command message; or
temporarily deactivate the NFC field in response to receiving a first portion of the first NFC response message.

13. A NFC reader device (208) comprising the integrated circuit of any preceding claim.

14. A wireless charger device (200) comprising the integrated circuit of any of claims 1 to 12 or the NFC reader (208) of claim 13.

15. A method of characterising a receiver device, the method comprising:
activating a near-field communication, NFC, field for communicating with the receiver device (202-1, 202-2);
sending a first NFC command message to the receiver device (202-1, 202-2);
receiving a first NFC response message from the receiver device (202-1, 202-2);
temporarily deactivating the NFC field during receipt of the first NFC response message from the receiver device (202-1, 202-2);
sending a second NFC command message to the receiver device (202-1, 202-2) subsequent to the temporary deactivation; and
determining if the receiver device (202-1, 202-2) comprises a passive NFC tag or a powered NFC device based on a response of the receiver device to the second NFC command message.
